# EUROPÄISCHE PATENTSCHRIFT

(11) **EP 0 652 660 B1**
(45) Veröffentlichungstag und Bekanntmachung des Hinweises auf die Patenterteilung: **13.01.1999**
(21) Anmeldenummer: 94117157.1
(22) Anmeldetag: 31.10.1994
(51) Int. Cl.: H04L 7/04, H04H 1/00

(54) **Verfahren zur Synchronisation eines RDS-Decoders**
Method for synchronisation of an RDS decoder
Méthode pour la synchronisation d'un décodeur RDS

(30) Priorität: 10.11.1993 DE 4338422
(43) Veröffentlichungstag der Anmeldung: 10.05.1995
(73) Patentinhaber: BECKER GmbH, D-76307 Karlsbad (DE)
(72) Erfinder: Klos, Rainer, Dipl.-Ing., D-76275 Ettlingen (DE)

(56) Entgegenhaltungen:
- EP-A- 0 491 084
- DE-A- 3 824 309

## Beschreibung

Die Erfindung betrifft ein Verfahren zur Synchronisation eines RDS-Decoders in einem Rundfunkempfänger auf den durch diesen empfangenen RDS-Datenstrom.

Die RDS-Informationen werden bekanntlich als Bitfolge auf einem Unterträger übertragen, der dem Multiplexsignal zugesetzt wird. Die Datenstruktur besteht aus aufeinanderfolgenden Gruppen zu jeweils 104 Bits. Jede Gruppe umfaßt vier Blöcke zu je 26 Bits. Jeder Block enthält ein Informationswort und ein Prüfwort. Jedes Informationswort besteht aus 16 Bits, und jedes Prüfwort besteht aus 10 Bits. Die 10 Bits eines Prüfwortes werden durch eine vorbestimmte Verknüpfung des 16 Bit-Informationswortes mit einem sogenannten Offset-Wort gebildet, das aus 10 Bits besteht und einen der möglichen Blocktypen A, B, C (oder C') und D angibt. Innerhalb jeder Gruppe folgen die vier Blöcke stets in derselben Reihenfolge aufeinander.

Wenn nun der Empfänger auf einen neuen Sender eingestellt wird, ist zunächst keine Beziehung zwischen den einzelnen Bits des empfangenen RDS-Datenstromes und der Datenstruktur zu erkennen. Die Lage des ersten empfangenen Bits innerhalb der Datenstruktur ist zufällig. Bevor eine Auswertung des Datenstromes stattfinden kann, muß die Lage der einzelnen Bits innerhalb der Datenstruktur erkannt werden. Diesen Vorgang nennt man Synchronisation des RDS-Decoders.

Ein Verfahren zur Synchronisation des RDS-Decoders ist in DIN EN 50 067, Anhang B beschrieben. Unter einem "Syndrom" einer empfangenen Bitfolge wird das Produkt dieser Bitfolge mit einer Paritätsprüfmatrix verstanden. Wenn die empfangene Bitfolge y und die Paritätsprüfmatrix H ist, so ist das Syndrom s = yH. Bei dem bekannten Synchronisationsverfahren wird nach dem Empfang einer Folge von 26 Bit damit begonnen, jeweils für die gerade empfangene 26-Bit-Folge das Syndrom zu berechnen. Mit jedem Datenaktschritt wird also das Syndrom aus der zuvor abgespeicherten 26-Bit-Folge (mit dem zuletzt empfangenen Datenbit am einen Ende und dem 26 Takte zurückliegenden Bit am anderen Ende) berechnet. Dieser Vorgang wird so lange fortgesetzt, bis zwei Syndrome, die gültigen Offset-Wörtern entsprechen und der gültigen Blockfolge einer Gruppe genügen (also A, B, C (oder C'), D), n x 26 Bits versetzt voneinander gefunden werden (n = 1, 2, 3, ...). Ist dies erreicht, wird der RDS-Decoder als synchronisiert angenommen. Ein derartiges Verfahren ist eben so aus der europäischen Offenlegungsschrift EP 491 084 bekannt.

Die heute üblichen RDS-Decoder erreichen eine Blocksynchronisation, wenn zwei gültige Blöcke im Abstand von 26 Bits empfangen werden, beispielsweise AB, BC usw. In dem Decoder wird jeweils der zuletzt gefundene gültige Block gespeichert. Wenn in einem Abstand von 26 Bits danach der in der Blockfolge nachfolgende Block gefunden wird, geht der Decoder in den synchronisierten Zustand über. Dieses Verfahren ist aber mit dem Nachteil behaftet, daß die Synchronisation nur auf zwei direkt aufeinanderfolgende Blöcke einrasten kann; überdies ist der Dateninhalt des ersten Blocks gewöhnlich verloren.

Nach einem anderen Vorschlag wird eine längere Sequenz des RDS-Datenstromes gespeichert, um auch über mehrere fehlerhaft empfangene Blöcke hinweg eine Synchronisation zu erreichen. Jedes empfangene Bit wird in einem FiFo-Speicher gespeichert. Beim Auftreten eines gültigen Syndroms wird geprüft, ob n x 26 Bits zuvor ebenfalls ein gültiges Syndrom vorhanden war. Dieses Verfahren, das sich mit einer in der oben genannten DIN-Norm, Anhang B beschriebenen Schaltung dürchführen laßt, erfordert einen hohen Speicheraufwand und eine sehr hohe Rechenleistung. Wenn bei jedem empfangenen Bit eines erkannten Blocks auch der Blocktyp abgespeichert wird, kann Rechenleistung eingespart werden, jedoch ist der Speicheraufwand noch erheblich größer.

Bei herkömmlichen stationären Rundfunkempfängern ist die längere Zeitspanne von einigen hundert Millisekunden bis zum Erreichen einer sicheren Synchronisation unproblematisch. Bei leistungsfähigen Rundfunkempfängern für mobilen Betrieb, insbesondere Autoradios, werden jedoch ständig im Hintergrund Informationen über die empfangbaren Sender gesucht, um beispielsweise Alternativfrequenzen zur Verfügung stellen zu können oder Verkehrsfunkdurchsagen zu erkennen und durchzuschalten. Bei jeder Einstellung eines Senders muß zunächst die Synchronisation des RDS-Decoders abgewartet werden, bevor eine Auswertung des RDS-Datenstromes erfolgen kann. Da der im Hintergrund arbeitende Empfänger ständig zwischen verschiedenen Sendern umgeschaltet wird, werden an die Sicherheit und Schnelligkeit der Synchronisation besonders hohe Ansprüche gestellt.

Durch die Erfindung wird ein Verfahren zur Synchronisation eines RDS-Decoders vorgeschlagen, das sich durch Schnelligkeit und hohe Sicherheit auszeichnet und dennoch mit geringem Speicher- und Rechenaufwand realisiert werden kann. Das erfindungsgemäße Verfahren zur Synchronisation eines RDS-Decoders in einem Rundfunkempfänger auf den durch diesen empfangenen RDS-Datenstrom ist dadurch gekennzeichnet, daß
a) ein durch den RDS-Datentakt inkrementierter Zähler, dessen Zählerstand in einer zufälligen Relation zu der Blockfolge des RDS-Datenstromes steht, jeweils bei Erreichen eines der Anzahl von Bits einer Gruppe entsprechenden Zählerstandes zurückgesetzt wird;
b) bei Empfang jeder Bitfolge, die einen gültigen Datenblock bildet, der aktuelle Zählerstand des Zählers mit dem Blocktyp in einem Blockspeicher gespeichert wird;
c) geprüft wird, welche in der Blocktabelle gespeicherten Kombinationen aus Zählerstand und Blocktyp miteinander vereinbar sind; und
d) die Synchronisation als erreicht angesehen wird, wenn eine vorbestimmte Anzahl von miteinander vereinbarten Kombinationen aus Zählerstand und Blocktyp gefunden wird.

Da in dem Blockspeicher nur solche Blöcke gespeichert werden, zu denen ein gültiges Syndrom errechnet wurde, ist der erforderliche Speicheraufwand gering. Entsprechend gering ist auch der Rechenaufwand, da der Umfang der auszuwertenden Daten gering ist. Je nach der Qualität des empfangenen Sendersignals füllt sich der Blockspeicher mehr oder weniger schnell mit gültigen Blöcken. Bereits nach wenigen hundert Millisekunden kann der Blockspeicher die für eine sichere Synchronisation benötigten Blockdaten enthalten.

Wenn gemäß einer vorteilhaften Weiterbildung des Verfahrens in dem Blockspeicher auch der Dateninhalt jedes gültigen Datenblocks gespeichert wird, können nach erreichter Synchronisation die gespeicherten Dateninhalte aller Blöcke, die der Blockfolge genügen, sofort ausgewertet werden.

Besonders zweckmäßig ist eine Ausführungsform des Verfahrens, bei welcher der Zähler aus einem Blockphasen-Zähler und einem Gruppenphasen-Zähler besteht, wobei der Zählbereich des Blockphasen-Zählers durch die Anzahl von Bits in einem Block des RDS-Datenstromes bestimmt ist und der Gruppenphasen-Zähler bei Überlauf des Blockphasen-Zählers inkrementiert wird und einen Zählbereich aufweist, der durch die Anzahl von Blöcken in einer Gruppe des RDS-Datenstromes gegeben ist. Bei praktischen Ausführungen zählt also der Blockphasen-Zähler von 0 bis 25, und der Gruppenphasen-Zähler zählt von 0 bis 3. Der jeweilige Zählerstand wird dann als Kombination der Zählerstände von Blockphasen-Zähler und Gruppenphasen-Zähler gespeichert, beispielsweise in der Form "14/2" oder "9/0". Bei der Prüfung, ob zwei Kombinationen aus Zählerstand und Blocktyp der in dem Blockspeicher gespeicherten gültigen Blöcke als miteinander vereinbar angesehen werden können, kann dann der Blocktyp unmittelbar mit dem Zählerstand des Blockphasen-Zählers korreliert werden. Bei übereinstimmender Blockphase und ungleichem Blocktyp kann der Zählerstand des Gruppenphasen-Zählers gezielt ausgewertet werden, um zu prüfen, ob der betreffende Block einer bestimmten Blockfolge genügt. Wenn beispielsweise mehrere Blöcke vom Typ D mit dem Zählerstand 14/1 in der Blocktabelle gespeichert sind, so genügen der durch diese beiden Blöcke definierten Blockfolge auch die Blöcke vom Typ A mit dem Zählerstand 14/2, die Blöcke vom Typ B mit dem Zählerstand 14/3 und die Blöcke vom Typ C mit dem Zählerstand 14/0.

Weitere Vorteile und Merkmale der Erfindung ergeben sich aus der folgenden Beschreibung und aus der Zeichnung, auf die Bezug genommen wird.

In der Zeichnung zeigen:
Fig. 1 ein schematisches Blockschaltbild eines Empfängers zur Durchführung des Verfahrens;
Fig. 2 die Organisation eines Blockspeichers, in dem die gefundenen gültigen Blöcke gespeichert werden; und
Fig. 3 den beispielhaften Inhalt des Blockspeichers von Fig. 2 einige hundert Millisekunden nach Einstellung des Empfängers auf einen neuen Sender.

In der nachfolgenden Beschreibung wird als Rundfunkempfänger von einem Autoradio ausgegangen, das über einen im Hintergrund arbeitenden zusätzlichen Empfangsteil verfügt, dessen Aufgabe darin besteht, empfangbare Sender zu identifizieren, Alternativfrequenzen zu prüfen, den RDS-Datenstrom auszuwerten und gewünschtenfalls bestimmte Verkehrsfunksender auf das Erscheinen von Durchsagekennungen zu überwachen. Mit einem solchen Rundfunkempfänger ist es möglich, den im Vordergrund arbeitenden Hauptempfänger auf beliebige gewünschte Sender einzustellen und die im Hintergrundbetrieb erkannten Verkehrsfunkdurchsagen nach Belieben durchzuschalten oder zum späteren Abruf zwischenzuspeichern.

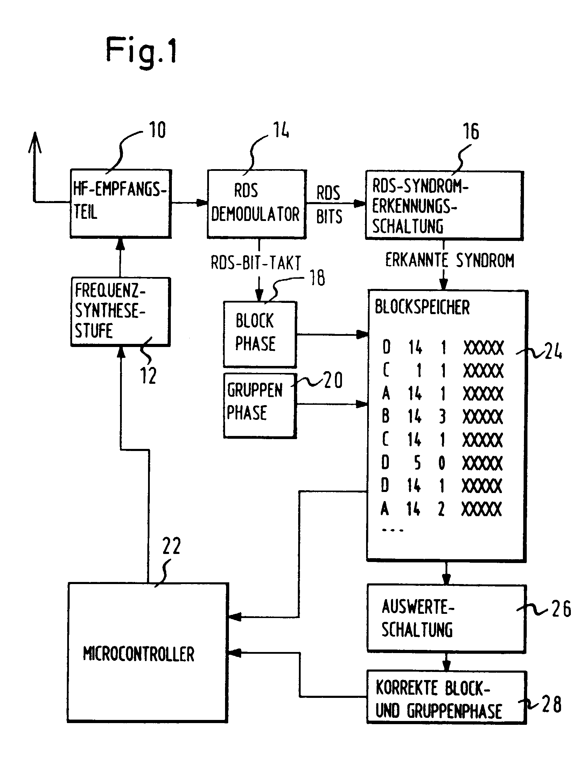

In Fig. 1 ist nur der im Hintergrund arbeitende Empfangsteil dargestellt. Er enthält einen HF-Empfangsteil 10, dessen Abstimmstufe durch eine Frequenz-Syntheseschaltung 12 angesteuert wird, einen nachfolgenden RDS-Demodulator 14, dessen Ausgang eine RDS-Syndrom-Erkennungsschaltung 16 ansteuert, zwei kaskadierte Zähler 18, 20, die durch den aus dem RDS-Demodulator 14 gewonnenen Datentakt inkrementiert werden, einen Mikrocontroller 22, einen Blockspeicher 24 sowie eine Auswerteschaltung 26, die an ein mit dem Mikrocontroller 22 verbundenes Register 28 die für die Synchronisation erforderliche Kombination aus Blockphase und Gruppenphase übergibt. Der Zähler 18 ist ein Blockphasen-Zähler, der durch den RDS-Datentakt aus dem RDS-Demodulator 14 inkrementiert wird und von 0 bis 25 zählt. Der Zähler 20 ist ein Gruppenphasen-Zähler, der von 0 bis 3 zählt und durch Überlauf des Blockphasen-Zählers 20 inkrementiert wird. Die Frequenz des RDS-Datentaktes beträgt 1187,5 Hz. Sie wird aus dem 57 kHz-Unterträgersignal durch Frequenzdivision gewonnen.

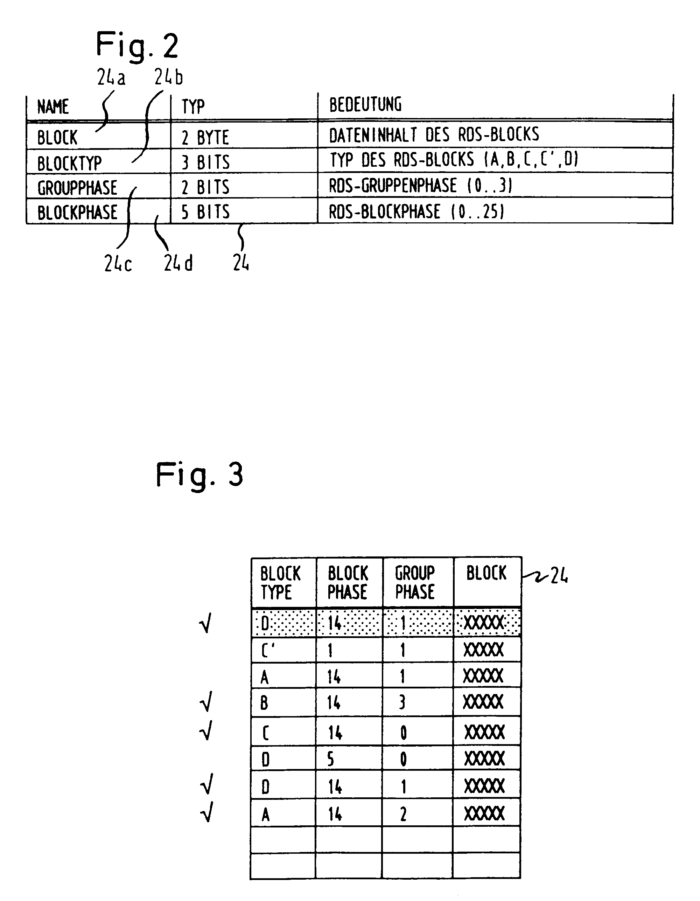

Die Beziehung zwischen den Zählerständen der Zähler 18, 20 und der jeweiligen Phasenlage des Datentaktes aus dem RDS-Demodulator 14 ist zufällig, bleibt jedoch über die für die Synchronisation relevanten Zeitspannen erhalten. Nach Einstellung des HF-Empfangsteils 10 auf einen Sender erfolgt die Übernahme der einzelnen Bits des empfangenen RDS-Datenstromes bitweise in der RDS-Syndrom-Erkennungsschaltrnng 16. Sobald die ersten 26 Bits empfangen sind, wird das zugehörige Syndrom errechnet. Bei fehlerfreiem Empfang eines Blocks ist sein Syndrom das Produkt des senderseitig dem Informationswort hinzugefügten Offset-Wortes mit der Paritätsprüfmatrix. Da nur bestimmte Offset-Wörter Gültigkeit haben, sind auch nur bestimmte Syndrome gültig. In der RDS-Syndrom-Erkennungsschaltung 16 wird für jede zuletzt empfangene 26-Bit-Datenfolge das Syndrom errechnet und geprüft, ob es ein gültiges Syndrom ist. Sobald ein gültiges Syndrom erkannt wird, erfolgt die Übergabe des entsprechenden Blocks an den Blockspeicher 24. Dieser hat die aus Fig. 2 ersichtliche Struktur. Für jeden einer Vielzahl von Datensätzen sind die Felder 24a, 24b, 24c und 24d definiert. Im Feld 24a, das die Bezeichnung "Block" trägt, wird der Dateninhalt des RDS-Datenblocks gespeichert. Hierfür werden 2 Byte (16 Bits) benötigt. Im Feld 24b, das mit ''Block-Typ'' bezeichnet ist, wird der jeweilige Typ des RDS-Datenblocks (A, B, C (oder C'), D) in 3 Bits gespeichert. Für die Speicherung der Gruppenphase im Feld 24c werden 2 Bits benötigt. Schließlich werden für die Speicherung der Blockphase im Feld 24d 5 Bits benötigt.

Von jedem Block, der in der RDS-Syndrom-Erkennungsschaltung 16 als gültig erkannt wurde, werden in den Blockspeicher 24 die 16 Informationsbits und der zugehörige Blocktyp übernommen. Zugleich werden die aktuellen Zählerstände des Blockphasen-Zählers 18 und des Gruppenphasen-Zählers 20 übernommen. Einige hundert Millisekunden nach Einstellung des HF-Empfangsteils 10 auf einen Sender kann der Inhalt des Blockspeichers 24 beispielsweise wie in Fig. 3 gezeigt aussehen. Er wird nun in der Auswerteschaltung 26 wie folgt analysiert: Es wird der Umstand ausgenutzt, daß die jeweiligen Zählerstände der Zähler 18 und 20 zwar in einer zufälligen Beziehung zur zeitlichen Lage des Beginns einer Gruppe im RDS-Datenstrom stehen, diese Beziehung jedoch über einen längeren Zeitraum aufrechterhalten bleibt. Die jeweiligen Zählerstände sind daher um ein konstantes Maß gegen die zeitliche Lage des Beginns einer Gruppe im RDS-Datenstrom versetzt. In einer gültigen Blockfolge müssen daher gleiche Zählerstände, die im Blockspeicher in mehreren Datensätzen abgelegt sind, demselben Blocktyp zugeordnet sein. Als erster Schritt wird daher überprüft, ob gleiche Zählerstände mit gleichem Blocktyp vorkommen. Sobald dieser Zustand eingetreten ist, wird davon ausgegangen, daß die zwei gefundenen Blöcke mit gleicher Zählerstandskombination und gleichem Blocktyp zu zwei aufeinanderfolgenden Gruppen des RDS-Datenstroms gehören und um n x 104 Bits (n = 1, 2, 3, ...) gegeneinander versetzt sind. Es kann nun bereits davon ausgegangen werden, daß die Synchronisation erreicht ist.

Der gefundenen Blockfolge genügen aber auch alle Kombinationen von Blocktyp und Zählerstand mit unmittelbar darauffolgendem Blocktyp, gleicher Blockphase und darauffolgender Gruppenphase. Ebenfalls gültig sind die Kombinationen mit gleicher Blockphase und einer um n x 26 Bits versetzten Kombination aus Blocktyp und Gruppenphase. Allgemein kann gesagt werden, daß zwei Kombinationen aus Zählerstand und Blocktyp, worin der Zählerstand aus Blockphase und Gruppenphase besteht, auch bei verschiedenem Blocktyp als miteinander vereinbar angesehen werden, wenn der Zählerstand um eine Anzahl von Inkrementen versetzt ist, die der Anzahl von Bits entspricht, um die zwei Datenblöcke der zwei verschiedenen Blocktypen im RDS-Datenstrom gegeneinander versetzt sind. Die Versetzung der Zahlerstände in Inkrementen muß also der Versetzung der Datenblöcke in Bits entsprechen.

Bei dem in Fig. 3 veranschaulichten Beispiel werden zwei Blöcke vom Blocktyp D mit dem Zählerstand 14/1 gefunden. Hiervon ausgehend wird eine Blockfolge angenommen und geprüft, ob weitere Blöcke dieser Blockfolge genügen. Nach den oben beschriebenen Kriterien sind dies der Block vom Typ B mit dem Zählerstand 14/3, der Block vom Typ C mit dem Zählerstand 14/0 und der Block vom Typ A mit dem Zählerstand 14/2. Hingegen sind mit der Blockfolge nicht vereinbar die Blöcke vom Blocktyp C' mit dem Zählerstand 1/1, der Block vom Typ A mit dem Zählerstand 14/1 sowie der Block vom Typ D mit dem Zählerstand 5/0. Der in Fig. 3 gezeigte Zustand ist für eine sichere Synchronisation mehr als ausreichend. Die im Feld "Block" bzw. 24a gespeicherten Dateninhalte der als gültig erkannten RDS-Blöcke können nunmehr sofort ausgewertet werden.

Wenn das empfangene RDS-Signal von schlechter Qualität ist, der RDS-Datenstrom also durch Störungen verfälscht wurde, werden vergleichsweise wenige Datenblöcke als gültig erkannt. Dies hat zwar zur Folge, daß mehr Zeit vergeht, um den Blockspeicher 24 zu füllen, jedoch wird keine höhere Speicherkapazität benötigt, weil immer nur diejenigen Blöcke in den Blockspeicher übernommen werden, deren Prüfung ein gültiges Syndrom ergeben hat. Es ist daher auch eine länger andauernde Prüfung bis zur erfolgreichen Synchronisation bei geringem Speicherbedarf möglich.

Das Kriterium für die als erfolgreich angesehene Synchronisation kann in weiten Grenzen beliebig gewählt werden. Durch Erhöhung der geforderten Mindestanzahl von Blöcken mit gleichem Zählerstand kann die Sicherheit des Synchronisationsverfahrens wesentlich gesteigert werden, ohne daß die Auswertungszeit überproportional ansteigt und ohne daß die Informationen der als gültig erkannten Blöcke verlorengehen.

Das Verfahren ist für gute und schlechte Empfangssignale gleichermaßen vorteilhaft. Da nur gültige Blöcke in den Blockspeicher 24 übernommen werden, füllt sich dieser bei schlechtem Signal nur langsam. Daher kann ein Sender über längere Zeit geprüft werden, um letztlich eventuell doch eine Synchronisation über viele fehlerhaft empfangene Blöcke hinweg zu erlangen. Bei guter Qualität des RDS-Signals füllt sich der Blockspeicher 24 hingegen schnell, so daß nach entsprechend kurzer Zeit eine eindeutige Häufung einer bestimmten Kombination aus Blocktyp und Zählerstand eintritt und eine sehr sichere Synchronisation erfolgen kann.

## Patentansprüche

1. Verfahren zur Synchronisation eines RDS-Decoders in einem Rundfunkempfänger auf den durch diesen empfangenen RDS-Datenstrom, dadurch gekennzeichnet, daß
a) ein durch den RDS-Datentakt inkrementierter Zähler, dessen Zählerstand in einer zufälligen Relation zu der Blockfolge des RDS-Datenstromes steht, jeweils bei Erreichen eines der Anzahl von Bits einer Gruppe entsprechenden Zählerstandes zurückgesetzt wird;
b) bei Empfang jeder Bitfolge, die einen gültigen Datenblock bildet, der aktuelle Zählerstand des Zählers mit dem Blocktyp (24b) in einer Blocktabelle (24) gespeichert wird;
c) geprüft wird, welche in der Blocktabelle gespeicherten Kombinationen aus Zählerstand und Blocktyp (24b) miteinander vereinbar sind; und
d) die Synchronisation als erreicht angesehen wird, wenn eine vorbestimmte Anzahl von miteinander vereinbarten Kombinationen aus Zählerstand und Blocktyp (24b) gefunden wird.

2. Verfahren nach Anspruch 1, dadurch gekennzeichnet, daß zwei Kombinationen aus Zählerstand und Blocktyp (24b) als miteinander vereinbar angesehen werden, wenn bei gleichem Zählerstand der Blocktyp (24b) übereinstimmt.

3. Verfahren nach Anspruch 1, dadurch gekennzeichnet, daß zwei Kombinationen aus Zählerstand und Blocktyp (24b) als miteinander vereinbar angesehen werden, wenn bei ungleichem Blocktyp (24b) der Zählerstand um eine Anzahl von Inkrementen versetzt ist, die der Anzahl von Bits entspricht, um die zwei Datenblöcke der zwei verschiedenen Blocktypen im RDS-Datenstrom versetzt sind.

4. Verfahren nach einem der vorstehenden Ansprüche, dadurch gekennzeichnet, daß zusätzlich zu dem Zählerstand und dem Blocktyp (24b) der Dateninhalt (24a) jedes gültigen Datenblocks in der Blocktabelle gespeichert wird.

5. Verfahren nach einem der vorstehenden Ansprüche, dadurch gekennzeichnet, daß der Zähler aus einem Blockphasen-Zähler (18) und einem Gruppenphasen-Zähler (20) besteht, daß der Zählbereich des Blockphasen-Zählers durch die Anzahl von Bits in einem Block des RDS-Datenstromes bestimmt wird und daß der Gruppenphasen-Zähler bei Überlauf des Blockphasen-Zählers inkrementiert wird und einen Zählbereich aufweist, der durch die Anzahl von Blöcken in einer Gruppe des RDS-Datenstromes gegeben ist.

## Claims

1. Method for synchronization of an RDS decoder in a broadcast radio receiver to the RDS datastream which is received by this receiver, characterized in that
a) a counter which is incremented by the RDS data clock and whose count is randomly related to the block sequence of the RDS datastream is in each case reset on reaching a count which corresponds to the number of bits in any group;
b) on reception of each bit sequence which forms a valid data block, the current count of the counter is stored with the block type (24b) in a block table (24);
c) a check is carried out to determine which combinations of count and block type (24b) stored in the block table can be combined with one another; and
d) the synchronization is regarded as having been achieved when a predetermined number of combinations of count and block type (24b) which are combined with one another is found.

2. Method according to Claim 1, characterized in that two combinations of count and block type (24b) are regarded as being combinable with one another if the block type (24b) for the same count matches.

3. Method according to Claim 1, characterized in that two combinations of count and block type (24b) are regarded as being combinable with one another when, with a block type (24b) that is not the same, the count is offset by a number of increments which corresponds to the number of bits by which two data blocks of the two different block types are offset in the RDS datastream.

4. Method according to one of the preceding claims, characterized in that, in addition to the count and the block type (24b), the data content (24a) of each valid data block is stored in the block table.

5. Method according to one of the preceding claims, characterized in that the counter comprises a block-phase counter (18) and a group-phase counter (20), in that the counting range of the block-phase counter is governed by the number of bits in one block of the RDS datastream, and in that, when the block-phase counter overflows, the group-phase counter is incremented and has a counting range which is governed by the number of blocks in one group in the RDS data-stream.

## Revendications

1. Méthode pour la synchronisation d'un décodeur RDS d'un poste récepteur radio avec le courant de données RDS reçu par celui-ci, caractérisé
a) en ce qu'un compteur incrémenté par la cadence de données RDS, et dont le relevé est aléatoire par rapport à la suite de blocs du courant de données RDS, est remis à zéro lorsque le relevé du compteur correspond au nombre de bits d'un groupe;
b) en ce qu'à la réception d'une suite de bits formant un bloc de données valable, le relevé actuel du compteur est mémorisé avec le type de bloc (24b) dans un tableau de blocs (24);
c) en ce qu'il est contrôlé quelles combinaisons, constituées du relevé du compteur et du type de bloc (24b), mémorisées dans le tableau de blocs (24) sont compatibles entre elles; et
d) en ce que la synchronisation est considérée comme atteinte, lorsqu'un nombre prédéterminé de combinaisons compatibles, constituées du relevé du compteur et du type de bloc (24b), a été trouvé.

2. Méthode selon la revendication 1, caractérisée en ce que deux combinaisons, constituées du relevé du compteur et du type de bloc (24b), sont considérées comme étant compatibles, lorsque, le relevé du compteur étant identique, le type de bloc (24b) est identique.

3. Méthode selon la revendication 1, caractérisée en ce que deux combinaisons, constituées du relevé du compteur et du type de bloc (24b), sont considérées comme étant compatibles, lorsque le type de bloc (24b) étant non identique, le relevé du compteur est décalé d'un nombre d'incréments correspondant au nombre de bits entre deux blocs de données des deux types de blocs différents décalés dans le courant de données RDS.

4. Méthode selon l'une des revendications précédentes, caractérisée en ce que, en plus du relevé du compteur et du type de bloc (24b), le contenu des données (24a) de chaque bloc de données valable est mémorisé dans le tableau de blocs.

5. Méthode selon l'une des revendications précédentes, caractérisée en ce que le compteur est composé d'un compteur de phases de blocs (18) et d'un compteur de phases de groupes (20), en ce que le domaine de mesure du compteur de phases de blocs est déterminé par le nombre de bits dans un bloc du courant de données RDS et en ce que le compteur de phases de groupes est incrémenté lorsque le domaine de mesure du compteur de phases de blocs est dépassé et que le compteur de phases de groupes dispose d'un domaine de mesure correspondant au nombre de blocs dans un groupe du courant de données RDS.
